# EUROPEAN PATENT SPECIFICATION

(11) **EP 1 705 837 B1**
(45) Date of publication and mention of the grant of the patent: **27.06.2007**
(21) Application number: 05102409.9
(22) Date of filing: 24.03.2005
(51) Int. Cl.: H04L 12/28

(54) **Scanning for wireless local area networks**
Abtastung nach drahtlosen lokalen Netzwerken
Balayage pour des réseaux locaux sans fil

(43) Date of publication of application: 27.09.2006
(73) Proprietor: Research In Motion Limited, Waterloo, Ontario N2L 3W8 (CA)
(72) Inventor: Abdel-Kader, Sherif, Waterloo, Ontario N2K 4H7 (CA); Gammon, Scott, Newfoundland & Labrador A1A 4V3 (CA)
(74) Representative: Rickard, David John

(56) References cited:
- US-A1- 2003 158 922
- US-A1- 2004 039 817
- US-A1- 2004 127 240
- US-B1- 6 842 460
- IEEE-SA STANDARDS BOARD: "ANSI/IEEE Std 802.11, 1999 Edition (R2003) Part 11: Wireless LAN Medium Access Control (MAC) and Physical Layer (PHY) Specifications" 12 June 2003 (2003-06-12), ANSI/IEEE STD 802.11, XX, XX, PAGE(S) 1,2,101-104,125 , XP002337533 * pages 101 - 102, section 10.3.2.1 * * pages 125 - 127, section 11.1.3 *

## Description

The invention generally relates to wireless local area networks (WLAN).
In particular, embodiments of the invention relate to power saving for one or more client devices in a wireless network.

Some wireless networks are based on a cellular architecture where the system is subdivided into wireless network cells. One type of wireless network cell, known as a basic service set (BSS), contains client devices controlled by a wireless network access point (AP), and another type of wireless network cell, known as an independent basic service set (IBSS), contains client devices which are not controlled by an access point.

In a BSS, client devices may communicate with the access point over a common wireless communication channel using a time sharing scheme. In an IBSS, client devices may communicate directly with other client devices over a common wireless communication channel using a time sharing scheme. A service set identifier (SSID) is a label or name that distinguishes one wireless network from another. Client devices use the SSID to establish and maintain connectivity. Wireless access points of different BSSs may be connected via a distribution system (DS) that is usually a wired network. The entire interconnected WLAN network, including the different WLAN cells, their respective WLAN access points and the distribution system is known as an extended service set (ESS). A client device may be able to switch between BSS mode and IBSS mode.

A client device may, or may not, be battery-powered. For example, a client device, such as a wireless-enabled laptop, a wireless-enabled cellphone, a wireless-enabled personal digital assistant (PDA), and the like, may sometimes be battery-powered, and at other times may receive power from an external source, such as a power outlet. Other client devices, such as a desktop computer, may receive power from an external source, such as a power outlet, and may not have the option to be battery-powered.

US6842460 discloses a method in a wireless device comprising: connecting to said device in Independent Basic Service Set mode; and actively scanning for a particular wireless network name by transmitting one or more probe requests.
However, it does not teach the additional step of switching to BSS mode and passively scanning after receiving a response at the active scanning step.

It may be beneficial to enhance the battery lifetime of battery-powered client devices.

### GENERAL

In accordance with one aspect of the present invention, there is provided a method in a wireless device, the method comprising: connecting to said device in Independent Basic Service Set mode; actively scanning for a wireless local area network having a particular wireless network name by transmitting one or more probe requests; and upon receiving a response that indicates discovery of one or more access points with said particular wireless network name, exiting said mode, entering Basic Service Set mode, and passively scanning.

In accordance with another aspect of the present invention, there is provided a wireless device comprising: a wireless local area network controller; and a processor; and a memory able to store executable code means which, when executed by said processor, is arranged to program said controller to connect to itself in Independent Basic Service Set mode and is arranged to instruct said controller to actively scan for a wireless local area network by transmitting one or more probe requests for a particular wireless network name, wherein upon receipt by said processor of a response that indicates discovery of one or more access points with said particular wireless network name, said code means, when executed by said processor, is arranged to program said controller to exit said mode and enter Basic Service Set mode, and is arranged to enable said controller to passively scan for said particular wireless network name.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is an illustration of an exemplary communications system, according to some embodiments of the invention;

Figure 2 is a block diagram of an exemplary client device, according to some embodiments of the invention; and

Figure 3 is a flowchart of an exemplary method to be performed by a client device, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### Description of Preferred Embodiments

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

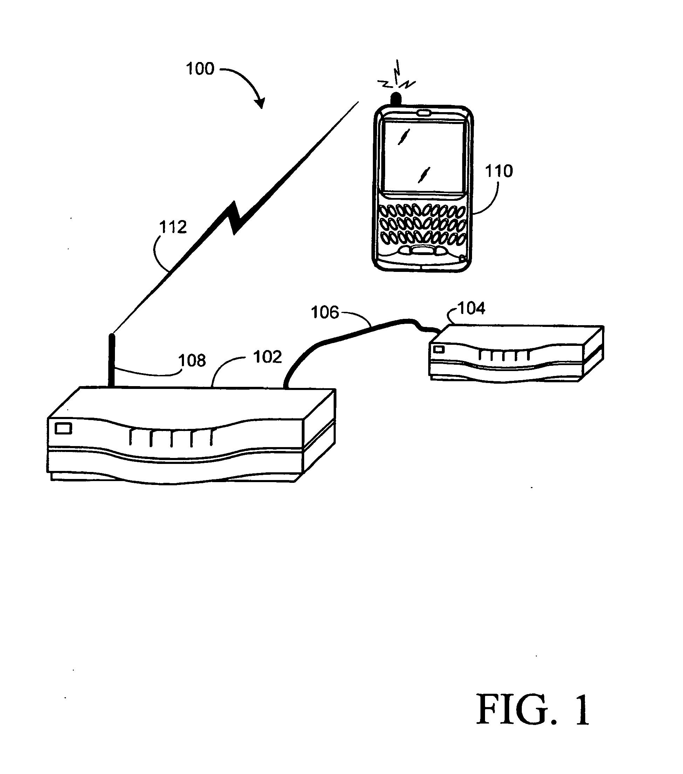

Figure 1 is an illustration of an exemplary communications system 100 according to embodiments of the invention. System 100 includes a wireless access point (AP) 102 and a network gateway 104 coupled to AP 102 via wired connections 106. Network gateway 104 and wired connections 106 may be part of a "distribution system" for AP 102. Non-limiting examples for network gateway 104 are cable modems, Asymmetric Digital Subscriber Line (ADSL) modems, Asynchronous Transfer Mode (ATM) network gateways, dial-up modems, satellite modems, Integrated Services Digital Network (ISDN) gateways, T-carrier 1 (T1) modems, and the like. It is obvious that any other configuration of a distribution system for AP 102 is possible.

AP 102 has at least one antenna 108 and is configurable to support at least one wireless network name, for example, at least one service set identifier (SSID). A non-exhaustive list of examples for antenna 108 includes a dipole antenna, a monopole antenna, a multilayer ceramic antenna, a planar inverted-F antenna, a loop antenna, a shot antenna, a dual antenna, an omnidirectional antenna and any other suitable antenna. AP 102 may include a router.

Exemplary communications system 100 includes a wireless client device 110. A non-exhaustive list of examples for client device 110 includes a wireless-enabled laptop, a wireless-enabled cellphone, a wireless-enabled personal digital assistant (PDA), a wireless-enabled video camera, a wireless-enabled gaming console, a wireless Internet-Protocol (IP) phone and any other suitable wireless client device. Client device 110 is able to execute a process to associate itself with AP 102 in a wireless network. For example, client device 110 may become associated with AP 102 over a wireless network 112.

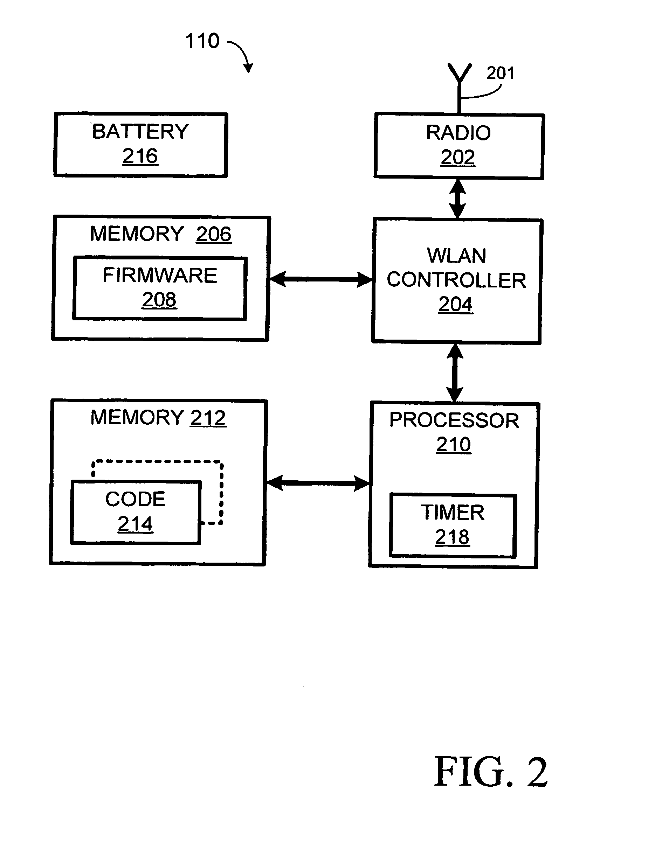

Figure 2 is a block diagram of an exemplary client device 110, according to some embodiments of the invention. Wireless client device 110 includes at least one antenna 201 coupled to a radio 202, which in turn is coupled to a WLAN controller 204. WLAN controller 204 may be coupled to a memory 206 storing firmware 208 to be executed by WLAN controller 204. Wireless client device 110 includes a processor 210 and a memory 212 coupled to processor 210. Memory 212 may store executable code 214 to be executed by processor 210.

Processor 210 may be coupled to WLAN controller 204 and may be able to control, at least in part, the operation of WLAN controller 204. Client device 110 includes a battery 216 to provide power to radio 202, WLAN controller 204, processor 210 and memories 206 and 212. Wireless client device 110 may include other components that, for clarity, are not shown.

A non-exhaustive list of examples for processor 210 includes a central processing unit (CPU), a digital signal processor (DSP), a reduced instruction set computer (RISC), a complex instruction set computer (CISC) and the like. Memories 206 and 212 may be fixed in or removable from client device 110. A non-exhaustive list of examples for memories 206 and 212 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antenna 201 includes a dipole antenna, a monopole antenna, a multilayer ceramic antenna, a planar inverted-F antenna, a loop antenna, a shot antenna, a dual antenna, an omnidirectional antenna and any other suitable antenna.

Radio 202, WLAN controller 204, processor 210 and memories 206 and 212 are functional blocks and may be implemented in any physical way in client device 110. For example, radio 202, WLAN controller 204, processor 210 and memories 206 and 212 may each be implemented in a separate integrated circuit, and optionally in additional discrete components. Alternatively, some of the functional blocks may be grouped in one integrated circuit. Furthermore, the functional blocks may be parts of application specific integrated circuits (ASIC), field programmable gate arrays (FPGA) or application specific standard products (ASSP).

In the example of FIG. 1, AP 102 and client device 110 are both "802.11-enabled", which means that wireless communications therebetween are in accordance with one or more of the following standards defined by the Institute of Electrical and Electronic Engineers (IEEE) for Wireless LAN MAC and Physical layer (PHY) specifications. However, it will be obvious to those of ordinary skill in the art how to modify the following for other existing WLAN standards or future related standards, including 802.11n.

| Standard | Published | Maximum Speed | Frequency | Modulation |
|---|---|---|---|---|
| 802.11 | 1997 | 2 Mbps | 2.4 GHz | Phase-Shift |
| 802.11a | 1999 | 54 Mbps | 5.0 GHz | Orthogonal Frequency Division Multiplexing |
| 802.11b | 1999 | 11 Mbps | 2.4 GHz | Complementary Code Keying |
| 802.11g | 2003 | 54 Mbps | 2.4 GHz | Orthogonal Frequency Division Multiplexing |

The 1999 edition of the 802.11 standard (as reaffirmed June 12, 2003) distinguishes between infrastructure WLANs (BSS) and ad-hoc WLANs (IBSS).

In order to join a BSS managed by AP 102, i.e. to become connected to AP 102 over wireless network 112, client device 110 has to initiate and perform a "connectivity sequence" with AP 102. In client device 110, WLAN controller 204 may perform the connectivity sequence, optionally jointly with processor 210. The connectivity sequence may include three consecutive processes - a "probing" process, an "authentication" process and an "association" process.

The probing process begins by having the client device transmit one or more "probe request" frames over one or more communication channels defined by the communication standard. Standard 802.11B, for example, defines 11 different communication channels. The probe request frame contains information about client device 110, such as which data rates are supported by client device 110 and to which SSID client device 110 requests to connect. Client device 110 may send probe requests blindly, without being aware whether an access point with the same SSID exists in its vicinity, and without knowing what data rate is acceptable for that access point. For that reason, client device 110 may send probe requests at the lowest data rate defined by the respective standard, e.g. 1 Mbps (Megabits per second).

If AP 102 receives a probe request frame on one of the communication channels, it may reply to the probe request frame by transmitting a "probe response" frame on that channel. A probe response frame includes information such as the SSID for which AP 102 is configured, a timestamp, data rates supported by AP 102, "beacon interval" information and physical layer information.

If client device 110 receives a probe response frame transmitted by AP 102, it may examine whether the SSID of AP 102 matches the SSID sent by client device 110 in the probe request, may examine other information included in the probe response frame and may examine the strength of the signal carrying the frame. Client device 110 may decide whether to continue the process for connecting with AP 102.

After completing the probing process, client device 110 may have to identify itself and to get permission to connect with AP 102. This process can have different forms, depending on a security mechanism deployed in the particular network. In one simple example for this process, client device 110 may send an "authentication request" frame to AP 102 and in response may receive an "authentication response" frame from AP 102. If the authentication response frame grants client device 110 permission to connect with AP 102, client device 110 may initiate the association process.

Client device 110 may initiate an association process by transmitting an "association" frame. In response, AP 102 may transmit an "association response" frame that indicates the success or failure of the association. If the association succeeded, the association response frame may include an association identification (AID) for client device 110.

The total time to complete a full connectivity sequence, from the first probe request to reception of the association response, may vary and may be as long as several seconds, for example, 3 seconds. The probing process itself may take, for example, 1 second. The timing in which the different response frames arrive at client device 110 during the connectivity sequence is unknown, and therefore, during the entire connectivity sequence, radio 202 may have to be able to receive signals and cannot be in a "sleep" state to conserve power.

It may be desired to decrease the amount of power consumed by client device 110 while performing a connectivity sequence in order to conserve the power stored in battery 216.

The 802.11 standard explains that access points transmit beacon frames at substantially regular time periods to announce the existence of and to synchronize wireless networks. The format of beacon frames and their contents is explained in detail in the 802.11 standard. The beacon interval is included in each beacon frame. The number of time units between target beacon transmission times is referred to as a "beacon interval".

Beacon frames may, or may not include the SSID of the wireless network they belong to. For example, beacon frames transmitted by AP 102 over wireless network 112 may contain the SSID associated with wireless network 112. In addition, each beacon frame also includes a timestamp which is the value of a clock internal to the access point at the actual transmission time of the beacon. A client device receiving the beacon frame will update its internal clock according to the timestamp in the received beacon frame. Moreover, beacon frames may include other information.

Client device 110 may look for a wireless network, for example, wireless network 112, using techniques known as "active scanning" and "passive scanning". In preparation, processor 210 may program a profile of the wireless network that is sought, including the network's SSID, to WLAN controller 204. Upon being operatively coupled to radio 202, WLAN controller 204 may automatically initiate passive scanning for the sought network. In passive scanning, WLAN controller 204 listens for beacon frames, one communication channel at a time. If a beacon frame including the SSID of the sought wireless network is received, WLAN controller 204 may initiate an authentication process and, if the authentication process is successful, may initiate an association process with the access point that sent the beacon frame. If a beacon frame not including any SSID is received, WLAN controller 204 may initiate a connectivity sequence by sending a probe request on the communication channel of the received beacon frame. If the profile in the probe response matches the profile stored in WLAN controller 204, WLAN controller 204 may initiate an authentication process and, if the authentication process is successful, may initiate an association process with the access point that sent the probe response. If the profile in the probe response matches the SSID of the profile stored in WLAN controller 204, but does not match other characteristics of that profile, or if the profile in the probe response does not match the SSID of the profile stored in WLAN controller 204, then WLAN controller 204 may proceed to passively scan on the next communication channel. Client device 110 may wait a predefined period of time, for example, 3 seconds, for WLAN controller 204 to report having successfully associated with the sought wireless network. If no such report is received during this predefined period of time (timed using a timer 218 in processor 210), client device 110 may take additional action, such as, for example, programming into WLAN controller 204 the profile of an additional wireless network to search for, or putting radio 202 into a sleep state.

If client device 110 were to use only passive scanning when looking for a wireless network and the sought network was unavailable, then client device 110 would be required to wait the full predefined period of time before taking additional action.

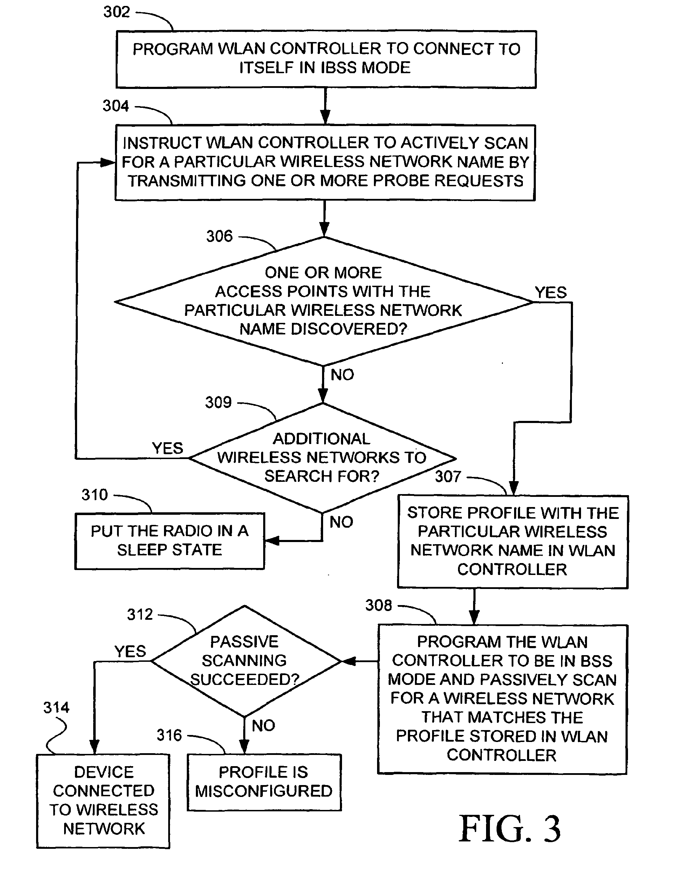

Figure 3 is a flowchart of an exemplary method to be implemented by client device 110, according to some embodiments of the invention. Executable code 214, when executed by processor 110, may cause client device 110 to implement the method of Figure 3.

At 302, client device 110 may program WLAN controller 204 to connect to itself in Independent Basic Service Set mode. This may effectively disable passive scanning by WLAN controller 204.

At 304, client device 110 may instruct WLAN controller 204 to actively scan for a particular wireless network name by transmitting one or more probe requests, each of the one or more probe requests transmitted on a different communication channel.

In active scanning, WLAN controller 204 does not wait for the receipt of a beacon frame in order to transmit the probe request. Moreover, WLAN controller 204 reports back to processor 210 as soon as WLAN controller 204 has succeeded in discovering an access point with the particular wireless network name in the probe requests of the active scanning. Similarly, WLAN controller 204 reports back to processor 210 as soon as WLAN controller 204 has failed to discover any access points with the particular wireless network name in the probe requests of the active scanning. Consequently, if no access point with the particular wireless network name has been discovered due to the active scanning, client device 110 will be notified of such sooner than if it had relied on passive scanning.

If client device 110 receives a response that indicates discovery of one or more access points with that particular wireless network name (checked at 306), client device 110 may program WLAN controller 204 to exit IBSS mode and enter BSS mode at 308. Prior to this, at 307, client device 110 may store a profile of the sought wireless network with the particular wireless network name in WLAN controller 204. In BSS mode, WLAN controller 204 will passively scan for a wireless network that matches the profile stored in WLAN controller 204, at 308.

The passive scanning, if successful (checked at 312), ought to result in association of client device 110 and the wireless network at 314. If passive scanning is not successful (checked at 312) despite the discovery of one or more access points with the particular wireless network name via active scanning, this is an indication that the profile stored in WLAN controller 204 at 307 is misconfigured (316).

In the event of a misconfigured profile, client device 110 may post an error to the user indicating an invalid configuration in the profile, and/or may automatically omit that profile from further scans until the user has edited the parameters of the profile (perhaps changing the authentication setting or the encryption setting).

Client device 110 may receive a response that indicates a failure to discover any access points with that particular wireless network name (checked at 306).

Memory 212 may store profiles of more than one wireless network to be sought. For example, a user of client device 110 may store in memory 212 profiles of the wireless networks at the user's home, the user's workplace and other wireless networks that the user may wish to connect to.

If there are no additional wireless networks to be sought (checked at 309), client device 110 may put radio 202 in a sleep state at 310. After sleeping for some time, client device 110 may put radio 202 into an active state and resume the method of Figure 3. The sleeping duration may be increased with each unsuccessful attempt to find the wireless network, until it reaches an upper limit.

If there are additional wireless networks are to be sought (checked at 309), then client device 110 may resume the method at 304 to actively scan for a different wireless network name.

While certain features of the invention have been illustrated and described herein, many modifications, substitutions, changes, and equivalents will now occur to those of ordinary skill in the art within the scope of the appended claims.

## Claims

1. A method in a wireless device (110), the method comprising:
connecting (302) to said device (110) in Independent Basic Service Set mode;
actively scanning (304) for a wireless local area network having a particular wireless network name by transmitting one or more probe requests; **characterised in that**
upon receiving a response that indicates discovery (306) of one or more access points (102) with said particular wireless network name, exiting said mode, entering Basic Service Set mode, and passively scanning (308).

2. The method of claim 1, further comprising:
storing (307) a profile in a wireless local area controller (204) belonging to said device, said profile comprising said particular wireless network name and then passively scanning (308) for wireless local area networks that match said profile.

3. The method of claim 2, further comprising:
identifying that said profile is misconfigured (316) if said passive scanning fails to result in an association.

4. The method of claim 1 or claim 2, further comprising:
upon receiving a beacon comprising said particular wireless network name, connecting (314) to the access point (102) that sent said beacon.

5. The method of claim 1 or claim 2, further comprising:
upon receiving a beacon not comprising any wireless network name, transmitting another probe request for said particular wireless network name.

6. A wireless device (110) comprising:
a wireless local area network controller (204); and
a processor (210); and
a memory (212) able to store executable code means (214) which, when executed by said processor (210), is arranged to program said controller (204) to connect to itself in Independent Basic Service Set mode and is arranged to instruct said controller (204) to actively scan for a wireless local area network by transmitting one or more probe requests for a particular wireless network name, **characterised in that** upon receipt by said processor (210) of a response that indicates discovery of one or more access points (102) with said particular wireless network name, said code means (214), when executed by said processor (210), is arranged to program said controller (204) to exit said mode and enter Basic Service Set mode, and is arranged to enable said controller (204) to passively scan for said particular wireless network name.

7. A machine readable medium comprising program code means (214) executable by a processor (210) of the device (110) of claim 6 for implementing the method of any one of claims 1 to 5.

8. A communication system (100) comprising an access point (102) and at least one wireless device (110) according to claim 6.

## Patentansprüche

1. Ein Verfahren in einem Drahtlosgerät (110), das Verfahren umfassend:
das Verbinden (302) mit dem Gerät (110) im IBBS-Modus (Independent Basic Service Set);
das aktive Abtasten (304) nach einem WLAN (Wireless Local Area Network) mit einem bestimmten Drahtlosnetzwerknamen durch das Übertragen von einer oder mehreren Anforderungsabfragen (Probe Requests);
**dadurch gekennzeichnet, dass**
beim Empfangen einer Antwort, die das Entdecken (306) von einem oder mehreren Access Points (102) mit dem bestimmten Drahtlosnetzwerknamen anzeigt, dieser Modus verlassen wird, in den BSS-Modus (Basic Service Set) übergegangen wird, und das passive Abtasten (308) durchgeführt wird.

2. Das Verfahren gemäß Anspruch 1, des Weiteren umfassend:
das Speichern (307) eines Profils in einem zu dem Gerät gehörenden WLAN-Controller (204), wobei das Profil den bestimmten Drahtlosnetzwerknamen umfasst, und dann das passive Abtasten (308) nach WLANs (Wireless Local Area Networks), die mit diesem Profil übereinstimmen.

3. Das Verfahren gemäß Anspruch 2, des Weiteren umfassend:
das Identifizieren, dass das Profil fehlkonfiguriert ist (316), wenn das passive Abtasten nicht in einer Assoziierung resultiert.

4. Das Verfahren gemäß Anspruch 1 und Anspruch 2, des Weiteren umfassend:
beim Empfangen eines Beacons, das den bestimmten Drahtlosnetzwerknamen enthält, das Verbinden (314) mit dem Access Point (102), von dem das Beacon gesendet wurde.

5. Das Verfahren gemäß Anspruch 1 oder Anspruch 2, des Weiteren umfassend:
beim Empfangen eines Beacons, das keinerlei Drahtlosnetzwerknamen enthält, das Übertragen einer weiteren Anforderungsabfrage (Probe Request) für diesen bestimmten Drahtlosnetzwerknamen.

6. Ein Drahtlosgerät (110), umfassend:
einen WLAN-Controller (204); und
einen Prozessor (210); und
einen Speicher (212), der in der Lage ist, ausführbare Codemittel (214) zu speichern, die bei der Ausführung durch den Prozessor (210) so eingerichtet sind, dass sie den Controller (204) so programmieren, dass dieser sich mit sich selbst im IBSS-Modus (Independent Basic Service Set) verbindet, und so eingerichtet sind, dass sie den Controller (204) anweisen, ein aktives Abtasten nach einem WLAN (Wireless Local Area Network) durchzuführen, indem eine oder mehrere Anforderungsabfragen (Probe Requests) für einen bestimmten Drahtlosnetzwerknamen übertragen werden,
**dadurch gekennzeichnet, dass**
wenn durch den Prozessor (210) eine Antwort empfangen wird, die das Entdecken von einem oder mehreren Access Points (102) mit dem bestimmten Drahtlosnetzwerknamen anzeigt, die Codemittel (214) bei der Ausführung durch den Prozessor (210) so eingerichtet sind, dass der Controller (204) zum Verlassen dieses Modus und zum Übergang in den BSS-Modus (Basic Service Set) programmiert wird, und so eingerichtet sind, dass sie dem Controller (204) das passive Abtasten nach dem bestimmten Drahtlosnetzwerknamen ermöglichen.

7. Ein maschinenlesbares Medium, das Programmcodemittel (214) umfasst, die durch einen Prozessor (210) des Geräts (110) gemäß Anspruch 6 ausgeführt werden können, um das Verfahren gemäß jedem der Ansprüche 1 bis 5 zu implementieren.

8. Ein Kommunikationssystem (100), umfassend einen Access Point (102) und mindestens ein Drahtlosgerät (110) gemäß Anspruch 6.

## Revendications

1. Un procédé installé sur un dispositif sans fil (110), le procédé comprenant :
la connexion (302) audit dispositif (110) en mode IBSS (ensemble de services de base indépendants),
la recherche active (304) d'un réseau local sans fil possédant un nom de réseau sans fil particulier en transmettant une ou plusieurs demandes de sonde, **caractérisé en ce que** :
à la réception d'une réponse qui signale la découverte (306) d'un ou plusieurs points d'accès (102) portant ledit nom de réseau sans fil particulier, la sortie dudit mode, l'entrée dans le mode ensemble de services de base, et une recherche passive (308).

2. Le procédé selon la Revendication 1, comprenant en outre :
la mise en mémoire (307) d'un profil sur un contrôleur de réseau local (204) appartenant audit dispositif, ledit profil incluant ledit nom de réseau sans fil particulier, et ensuite une recherche passive (308) de réseaux locaux sans fil qui correspondent audit profil.

3. Le procédé selon la Revendication 2, comprenant en outre :
l'identification que ledit profil est mal configuré (316) si ladite recherche passive ne parvient pas à produire une association.

4. Le procédé selon la Revendication 1 ou 2, comprenant en outre :
à la réception d'une balise comprenant ledit nom de réseau sans fil particulier, la connexion (314) au point d'accès (102) qui a envoyé ladite balise.

5. Le procédé selon la Revendication 1 ou 2, comprenant en outre :
à la réception d'une balise ne comprenant pas de nom de réseau sans fil particulier, l'émission d'une autre demande de sonde pour ledit nom de réseau sans fil particulier.

6. Un dispositif sans fil (110) comprenant :
un contrôleur de réseau local sans fil (204), et
un processeur (210), et
une mémoire (212) capable de conserver en mémoire du code exécutable (214) qui, lorsqu'il est exécuté par ledit processeur (210) est agencé de façon à programmer ledit contrôleur (204) à se connecter en mode ensemble de services de base indépendants et est agencé de façon à demander audit contrôleur (204) de rechercher activement un réseau local sans fil en envoyant une ou plusieurs demandes de sonde portant sur un nom de réseau sans fil particulier, **caractérisé en ce que**, à la réception par ledit processeur (210) d'une réponse qui signale la découverte d'un ou plusieurs points d'accès (102) portant ledit nom de réseau sans fil particulier, ledit code (214), lorsqu'il est exécuté par ledit processeur (210), est agencé de façon à programmer ledit contrôleur (204) pour sortir dudit mode et entrer dans le mode ensemble de services de base, et est agencé de façon à permettre audit contrôleur (204) de rechercher passivement ledit nom de réseau sans fil particulier.

7. Un support lisible par ordinateur comprenant du code de programme (214) exécutable par un processeur (210) du dispositif (110) selon la Revendication 6 destiné à la mise en oeuvre du procédé selon l'une quelconque des Revendications 1 à 5.

8. Un système de communication (100) comprenant un point d'accès (102) et au moins un dispositif sans fil (110) selon la Revendication 6.
